(19) Europäisches Patentamt
European Patent Office
Office européen des brevets

(11) **EP 4 399 105 B1**

(12) **EUROPÄISCHE PATENTSCHRIFT**

(45) Veröffentlichungstag und Bekanntmachung des Hinweises auf die Patenterteilung:
**08.04.2026  Patentblatt 2026/15**

(21) Anmeldenummer: **22761204.1**

(22) Anmeldetag: **05.08.2022**

(51) Internationale Patentklassifikation (IPC):
**B60C 23/04** *(2006.01)*

(52) Gemeinsame Patentklassifikation (CPC):
**B60C 23/0489; B60C 23/0416**

(86) Internationale Anmeldenummer:
**PCT/EP2022/072078**

(87) Internationale Veröffentlichungsnummer:
**WO 2023/020862 (23.02.2023 Gazette 2023/08)**

(54) **VERFAHREN ZUR BESTIMMUNG DER POSITION VON RÄDERN AN EINEM FAHRZEUG**

METHOD FOR DETERMINING THE POSITION OF WHEELS ON A VEHICLE

PROCÉDÉ DE DÉTERMINATION DE LA POSITION DE ROUES SUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.08.2021  DE 102021209055**

(43) Veröffentlichungstag der Anmeldung:
**17.07.2024  Patentblatt 2024/29**

(73) Patentinhaber: **Robert Bosch GmbH**
**70442 Stuttgart (DE)**

(72) Erfinder: **FOELL, Roman**
**72663 Grossbettlingen (DE)**

(56) Entgegenhaltungen:
**US-A1- 2014 167 950    US-A1- 2016 297 262**

**Beschreibung**

Stand der Technik

Die Erfindung betrifft ein Verfahren zur Bestimmung der Position von Rädern an einem Fahrzeug mittels zumindest zwei Beschleunigungssensoren, wobei jeweils einer an jedem von zumindest zwei Rädern des Fahrzeugs angeordnet ist.

Die Erfindung betrifft weiter eine Vorrichtung zur Bestimmung der Position von Rädern an einem Fahrzeug mittels Beschleunigungssensoren an den Rädern des Fahrzeugs, umfassend zumindest zwei Beschleunigungssensoren, wobei jeweils einer an jedem von zumindest zwei Rädern des Fahrzeugs angeordnet ist. Reifendruckkontrollsysteme oder TPMS-Systeme, wobei TPMS als Abkürzung für Tire Pressure Monitoring System - Reifendruckkontrollsystem steht, dienen der Überwachung des Reifendrucks bei Kraftfahrzeugen, um Unfälle durch fehlerhaften Reifendruck zu verhindern. Aus US2016/297262 A1 und US2014/167950 A1 sind derartige System bekannt. Mit dem auf das jeweilige Fahrzeug abgestimmten, optimalen Reifendruck lässt sich sowohl der Kraftstoffverbrauch als auch der Reifenverschleiß verringern. Reifendruckkontrollsysteme können eine Veränderung des Luftdrucks im jeweiligen Reifen sowohl aktiv mit elektronischen Drucksensoren detektieren, die den Luftdruck und eine Identifizierung per Funk in gewissen Zeitintervallen an ein Steuergerät übermitteln, als auch passiv anhand einer Veränderung des Abrollumfangs und anhand einer Veränderung einer charakteristischen Schwingungsfrequenz des jeweiligen Rades. Hierbei ist es notwendig, die jeweilige Position von Rädern an einem Fahrzeug zu kennen.

Offenbarung der Erfindung

In einer Ausführungsform stellt die vorliegende Erfindung ein Verfahren zur Bestimmung der Position von Rädern an einem Fahrzeug mittels zumindest zwei Beschleunigungssensoren bereit, wobei jeweils einer an jedem von zumindest zwei Rädern des Fahrzeugs angeordnet ist,

umfassend die Schritte

- Berechnen einer Umdrehungszeit zumindest eines der zumindest zwei Räder basierend auf einer ermittelten Zentrifugalkraft mittels des jeweiligen Beschleunigungssensors,
- Ermitteln einer Tangentialbeschleunigung des Rades mittels des jeweiligen Beschleunigungssensors über eine Zeitspanne, die zumindest der Hälfte der Umdrehungszeit entspricht,
- Festlegen und/oder Anpassen des Startpunkts der Zeitspanne in Abhängigkeit der Größe des Anfangswerts und/oder Endwerts der Tangentialbeschleunigung im Vergleich zur zeitlichen Position eines Extremums der Tangentialbeschleunigung in der Zeitspanne,
- Bestimmen der zeitlichen Position des zeitlich jüngsten Extremums der Tangentialbeschleunigung in der Zeitspanne;

wobei mittels der Schritte zumindest zwei zeitliche Positionen von zeitlich jüngsten Extrema in unterschiedlichen Zeitspannen bestimmt werden und wobei in einem weiteren Schritt die Position des Rades am Fahrzeug durch Vergleich der zumindest zwei bestimmten zeitlichen Positionen mit weiteren vorgegebenen Daten erfolgt.

In einer Ausführungsform stellt die vorliegende Erfindung eine Vorrichtung zur Bestimmung der Position von Rädern an einem Fahrzeug, umfassend

zumindest zwei Beschleunigungssensoren, wobei jeweils einer an jedem von zumindest zwei Rädern des Fahrzeugs angeordnet ist, eine Bereitstellungseinrichtung, die weitere Daten der zumindest zwei Räder bereitstellt und eine Auswerteeinrichtung, die mit den Beschleunigungssensoren und der Bereitstellungseinrichtung verbunden ist und die ausgebildet ist, die folgenden Schritte durchzuführen

- Berechnen einer Umdrehungszeit zumindest eines der zumindest zwei Räder basierend auf einer ermittelten Zentrifugalkraft anhand von Daten des jeweiligen Beschleunigungssensors,
- Ermitteln einer Tangentialbeschleunigung des Rades anhand von Daten des jeweiligen Beschleunigungssensors über eine Zeitspanne, die zumindest der Hälfte der Umdrehungszeit entspricht,
- Festlegen und/oder Anpassen des Startpunkts der Zeitspanne in Abhängigkeit der Größe des Anfangswerts und/oder Endwerts der Tangentialbeschleunigung im Vergleich zur zeitlichen Position eines Extremums der Tangentialbeschleunigung in der Zeitspanne,
- Bestimmen der zeitlichen Position des zeitlich jüngsten Extremums der Tangentialbeschleunigung in der Zeitspanne, und

wobei mittels der Schritte zumindest zwei zeitliche Positionen von zeitlich jüngsten Extrema in unterschiedlichen Zeitspannen bestimmt werden und wobei die Position des Rades am Fahrzeug durch Vergleich der zumindest zwei bestimmten zeitlichen Positionen mit weiteren vorgegebenen Daten der Bereitstellungseinrichtung durch die Auswerteeinrichtung erfolgt.

Einer der damit erzielten Vorteile ist, dass auf einfache, energieeffiziente, schnelle und zuverlässige Weise die Position von Rädern am Fahrzeug bestimmt werden kann. So kann beispielsweise ermittelt werden, ob ein mittels des TPMS gemessener Druck am vorderen linken Rad oder am hinteren rechten Rad erfolgt ist.

Weiter Merkmale, Vorteile und weitere Ausführungsformen der Erfindung sind im Folgenden beschrieben oder werden dadurch offenbar.

Gemäß einer vorteilhaften Weiterbildung der Erfindung wird ein neuer zeitlicher Startpunkt für die Zeitspanne in Abhängigkeit einer vorgegebenen Anzahl von Samples festgelegt, falls das Extremum in Form eines Maximums nicht in der Zeitspanne liegt. Damit kann auf einfache und zuverlässige Weise ein geeigneter neuer Startpunkt festgelegt werden, sodass sich die Wahrscheinlichkeit erhöht, bei der erneuten Bestimmung der zeitlichen Position das zeitlich jüngste Extremum der Tangentialbeschleunigung, hier das Maximum, in der Zeitspanne aufzufinden. Insbesondere kann bereits bei einer einzigen erneuten Bestimmung der zeitlichen Position das zeitlich jüngste Extremum, hier das Maximum, fast sicher, also mit überwiegender Wahrscheinlichkeit gefunden werden. Als "Sample" ist allgemein ein Zeitpunkt zu verstehen an dem ein Wert, beispielsweise eine Beschleunigung gemessen wird.

Gemäß einer weiteren vorteilhaften Weiterbildung der Erfindung wird im Falle eines Extremums in Form eines Maximums, der neue zeitliche Startpunkt, im Fall, wenn der Anfangswert größer ist als der Endwert, als mindestens das 1,525-fache der Anzahl der Samples und maximal das 1,725-fache der Anzahl der Samples, insbesondere das 1,625-fache der Anzahl der Samples, festgelegt, und wobei der neue zeitliche Startpunkt, wenn der Anfangswert kleiner ist als der Endwert, als mindestens das 0,4-fache der Anzahl der Samples und maximal das 0,6-fache der Anzahl der Samples, insbesondere das 0,5-fache, der Anzahl der Samples festgelegt. Damit kann die Wahrscheinlichkeit noch weiter erhöht werden bei der erneuten Bestimmung der zeitlichen Position das zeitlich jüngste Extremum der Tangentialbeschleunigung, hier das Maximum der Tangentialbeschleunigung, in der nächsten Zeitspanne von Beschleunigungswerten aufzufinden.

Gemäß einer weiteren vorteilhaften Weiterbildung der Erfindung wird im Falle eines Minimums der neue zeitliche Startpunkt im Fall, wenn der Anfangswert größer ist als der Endwert, als zwischen dem 1,1-fachen und dem 1,3-fachen der Anzahl der Samples, insbesondere dem 1,2-fachen der Anzahl der Samples festgelegt, und wobei der neue zeitliche Startpunkt, wenn der Anfangswert kleiner ist als der Endwert, als zwischen dem 0,6-fachen und 0,8-fachen der Anzahl der Samples, insbesondere dem 0,7-fachen der Anzahl der Samples, festgelegt. Damit kann die Wahrscheinlichkeit auch im Falle eines Minimums als Extremum noch weiter erhöht werden, bei der erneuten Bestimmung der zeitlichen Position das zeitlich jüngste Extremum der Tangentialbeschleunigung, hier das Maximum der Tangentialbeschleunigung, in der nächsten Zeitspanne von Beschleunigungswerten aufzufinden.

Gemäß einer weiteren vorteilhaften Weiterbildung der Erfindung erfolgt das Bestimmen der zeitlichen Position des zeitlich jüngsten Extremums anhand eines angepassten Polynoms zumindest zweiten Grades. Dies ermöglicht eine ausreichend genaue Bestimmung des Extremums bei gleichzeitig wenig Rechenressourcen.

Gemäß einer weiteren vorteilhaften Weiterbildung der Erfindung wird die Frequenz der Samples anhand der Zeitspanne festgelegt. Damit kann auf flexible Weise die gleiche Anzahl der Samples, sprich Zeitpunkte, an denen Beschleunigungsdaten ermittelt werden, bei einer beliebigen Größe der Zeitspanne verwendet werden.

Gemäß einer weiteren vorteilhaften Weiterbildung der Erfindung werden die weiteren vorgegebenen Daten von einem weiteren Fahrzeugsystem, insbesondere einem ABS-System bereitgestellt. Damit kann auf besonders einfache Weise anhand eines Vergleichs, eine Korrelation oder dergleichen der weiteren Daten und zumindest zwei bestimmten zeitlichen Positionen des jüngsten Extremums das jeweilige Rad identifiziert werden. Zur Identifikation einer Position eines Rades wird das beschriebene Verfahren insbesondere mehrfach durchgeführt. Es werden mehrere zeitliche Positionen des jüngsten Extremums, insbesondere des Maximus in den jeweiligen Zeitspannen ermittelt und dann an eine Auswerteeinrichtung oder dergleichen zur Identifikation der Position eines Rades übertragen.

Gemäß einer weiteren vorteilhaften Weiterbildung der Erfindung werden, falls die Position des Rades nicht mit einer vorgegebenen Genauigkeit bestimmt werden kann, die Schritte des Verfahrens erneut durchgeführt. Damit wird die Zuverlässigkeit bei der Bestimmung der Position des Rades am Fahrzeug verbessert.

Gemäß einer weiteren vorteilhaften Weiterbildung der Erfindung wird die Güte der Anpassung des Polynoms ermittelt und insbesondere an eine Auswerteeinrichtung übertragen. Vorteil hiervon ist, dass ein weiterer Parameter zur Auswertung zur Verfügung steht, mit dem beispielsweise festgelegt werden kann, ob erneut eine Aufzeichnung von Beschleunigungsdaten, eine Bestimmung des Extremums, etc. durchgeführt werden muss.

Gemäß einer weiteren vorteilhaften Weiterbildung der Erfindung wird für die zeitliche Position des Extremums eine Korrektur durchgeführt, die abhängig ist von der Periodendauer einer Radumdrehung und von der Radial- und Tangentialbeschleunigung des Rades. Mit anderen Worten erfährt die zeitliche Position des Extremums eine Korrektur, die abhängig ist von der Periodendauer einer Radumdrehung und der Beschleunigungswerte in x-Richtung und z-Richtung. Damit wird bei Verdrehung des Beschleunigungssensors auf der Felge eine Korrektur der zeitlichen Position des zeitlich jüngsten Extremums, hier das Maximum, durchgeführt, was insgesamt die Zuverlässigkeit und Robustheit des Verfahrens verbessert.

Weitere wichtige Merkmale und Vorteile der Erfindung ergeben sich aus den Unteransprüchen, aus den Zeichnungen, und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt in schematischer Form

Figur 1   ein Ablaufdiagramm eines Verfahrens gemäß einer Ausführungsform der vorliegenden Erfindung; und

Figur 2   eine Vorrichtung gemäß einer Ausführungsform der vorliegenden Erfindung

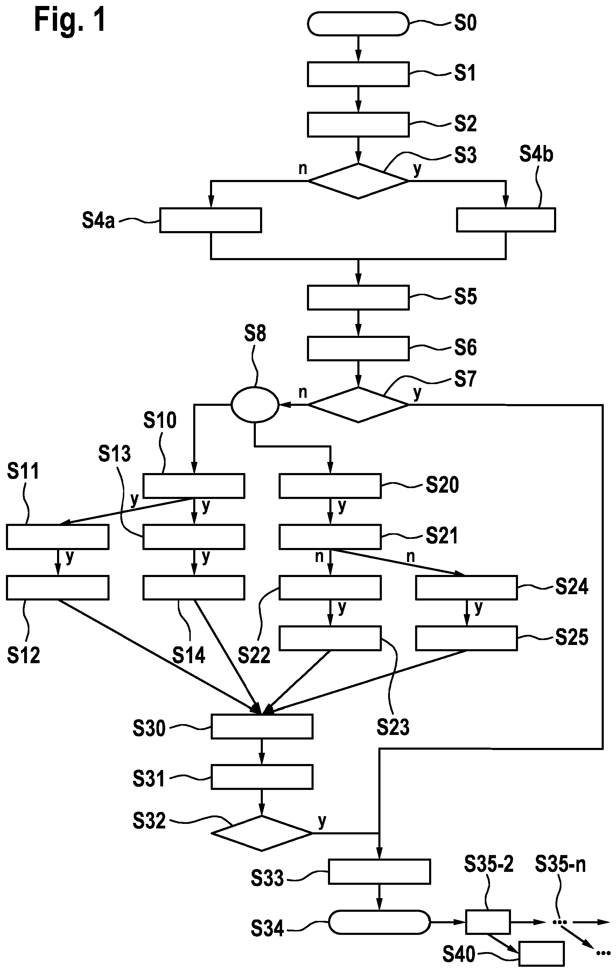

Figur 1 zeigt in schematischer Form ein Ablaufdiagramm eines Verfahrens gemäß einer Ausführungsform der vorliegenden Erfindung.

In Figur 1 ist ein Verfahren zur Bestimmung der Position eines Rades an einem Fahrzeug mittels eines Beschleunigungssensors am Rad gezeigt.

Nach dem Start des Verfahrens in einem Schritt S0 wird in einem ersten Schritt S1 die Beschleunigungen des Rades anhand des Sensors entlang der x-Richtung und der z-Richtung einzeln bestimmt. Die Beschleunigung in x-Richtung repräsentiert hier die Tangentialbeschleunigung am Ort des Beschleunigungssensors. Die Beschleunigung in z-Richtung repräsentiert hier die Radialbeschleunigung am Ort des Beschleunigungssensors. Anhand der gemessenen Beschleunigung kann nun in einem zweiten Schritt S2 die Zentrifugalbeschleunigung ermittelt werden.

In einem nächsten Schritt S3 wird überprüft, ob für das jeweilige Rad Reifendaten vorliegen. Anhand von diesen kann dann die Umdrehungsgeschwindigkeit und damit die Rotationsperiode bestimmt werden. Sind diese vorhanden, kann in einem Schritt S4b die entsprechende Rotationsperiode bestimmt werden. Liegen diese Reifendaten nicht vor, wird eine entsprechende Rotationsperiode geschätzt oder angenommen gemäß Schritt S4a.

Die so erhaltene Rotationsperiode bildet nun den Ausgangspunkt für die Bestimmung der Position des Rades. In einem nächsten Schritt S5 wird nun über die Hälfte der Zeit der Rotationsperiode die Tangentialbeschleunigung gemessen und anschließend zum ersten Mal versucht die zeitliche Position des jeweils jüngsten Maximums in den Beschleunigungsdaten des Beschleunigungssensors aufzufinden gemäß Schritt S6. In einem Schritt S7 wird überprüft, ob die zeitliche Position des jeweils jüngsten Maximums bestimmt werden konnte. Ist die zeitliche Position des jeweils jüngsten Maximums nicht genau bestimmbar, werden die folgenden Schritte durchgeführt.

Der an der Felge fixierte Beschleunigungssensor rotiert mit dem Rad und gibt - wie bereits ausgeführt - an der x-Achse für die Tangential-Beschleunigung Beschleunigungssignale aus, die während der Fahrt des Fahrzeugs ein oszillierendes Verhalten aufweisen. Dieses oszillierende Signal ist von der Erdbeschleunigung induziert. Der Teil des Verfahrens der Autolokation, welcher die Drehwinkel-Position bestimmt, berechnet einen bestimmten Zeitpunkt, die sogenannte Lookback-Time, nämlich die zeitliche Position des jeweils jüngsten Maximums in den Beschleunigungsdaten des Beschleunigungssensors. Dies entspricht der 3 beziehungsweise 9 Uhr Position des Rades. Dazu werden während des Betriebs des Fahrzeugs zu regelmäßigen Zeitpunkten durch den Beschleunigungssensor entsprechende Beschleunigungsdaten ausgeben. Diese Daten werden auf die zu bestimmende Lookback-Time hin untersucht. Dazu wird eine Sampling-Rate für die Daten des Beschleunigungssensors so angepasst und es wird zeitlich solange gesampelt, dass jeweils immer ein Zeitfenster von einer halben Radumdrehung gesampelt wird. Die Ermittlung der Sampling-Dauer und -frequenz erfolgt durch Berechnung der Zentrifugalkraft und im Anschluss daran der Berechnung der Rotationsperiode. Das Verfahren, welches die Lookback-Time berechnen soll, passt beziehungsweise fittet ein erstes Polynom zumindest zweiten Grades, insbesondere zweiten Grades an die ersten ausgegebenen Beschleunigungsdaten an. Liegt in den über eine halbe Rotationsperiode gesampelten Daten ein Maximum der Beschleunigung, beziehungsweise liegt innerhalb des gefitteten Intervalls des Polynoms zumindest zweiten Grades, insbesondere zweiten Grades, ein Maximum der Beschleunigung, wird die Lookback-Time über das angefittete Polynom zumindest zweiten Grades, insbesondere zweiten Grades, durch Extremwertuntersuchung bestimmt. Das Fitten oder Anpassen des Polynoms zumindest zweiten Grades, insbesondere zweiten Grades, sowie die Extremwertuntersuchung zur Bestimmung der Lookback-Time ist im Schritt S6 zusammengefasst.

Liegt in den über eine halbe Rotationsperiode gesampelten Daten kein Maximum, beziehungsweise liegt innerhalb des gefitteten Intervalls des Polynoms zumindest zweiten Grades, insbesondere zweiten Grades, kein Maximum, gibt der Beschleunigungssensor erneut Daten aus. Die Abfrage hierzu findet in Schritt S7 statt.

Die Zeitpunkte, ab der die neuen Daten gesampelt werden, um einen erneuten erfolgreichen Fit der Daten, das heißt, es konnte eine zeitliche Position eines Maximum ermittelt werden, zu gewährleisten, kann von verschiedenen, nachfolgend aufgeführten Kriterien abhängen: Hierzu wird in einem Schritt S8 zunächst die Anzahl an Samples S für einen Fit vorgegeben. Die Zeitpunkte, die beschrieben werden sollen, werden angegeben in Form von diskreten Werten gezählt ab dem ersten Sample des ersten Samplings an Daten. Mit anderen Worten weist ein Sampling mehrere Werte von Beschleunigungen zu diskreten Zeitpunkten, den "Samples", auf. So bedeutet beispielsweise der Zeitpunkt ,20', dass dies die Daten des 20ten Samples enthalt an der 20. Position nach dem ersten Sample. Dies ist insbesondere dann möglich, wenn eine feste Sampling-Periode vorgegeben wird.

Zuerst wird überprüft, ob beim ersten Fitting des Polynoms zumindest zweiten Grades, insbesondere zweiten Grades, ein Minimum in einem Schritt S10 oder Maximum in einem Schritt S20 modelliert wurde. Wenn ein Minimum gemäß Schritt S10 modelliert wurde, erfolgt die Überprüfung, ob der Anfangswert des Fittings über eine halbe Rotationsperiode größer gemäß Schritt S11 oder kleiner gemäß Schritt S13 als der Endwert des Fittings über eine halbe Rotationsperiode ist. Ist er gemäß Schritt S11 größer als der Endwert wird von dem Zeitpunkt an darauffolgenden Samples durch die Funktion ,Aufrunden (6/5*S)' gemäß Schritt S12 erneut die Anzahl von S Samples gesampelt und erneut ein Polynom zumindest zweiten Grades, insbesondere zweiten Grades, gefittet.

Ist er gemäß Schritt S13 kleiner als der Endwert, wird von dem Zeitpunkt an darauffolgenden Samples durch die Funktion ,Aufrunden(7/10*S)' gemäß Schritt S14 erneut die Anzahl von S Samples gesampelt und ebenfalls erneut gefittet. Hat das erste Fitting ein Maximum gemäß Schritt S20 modelliert, wird erst in einem Schritt S21 geprüft, ob das Maximum innerhalb des ersten Fittings liegt. Wenn dies nicht der Fall ist, wird ebenfalls geprüft, ob der Anfangswert des Fittings über eine halbe Rotationsperiode größer gemäß Schritt S22 oder kleiner gemäß Schritt S24 als der Endwert des Fittings über eine halbe Rad- bzw. Rotationsperiode ist.

Ist er größer als der Endwert wird gemäß Schritt S23 von dem Zeitpunkt an darauffolgenden Samples durch die Funktion ,Aufrunden(13/8*S)' erneut die Anzahl von S Samples gesampelt und erneut gefittet. Ist er kleiner als der Endwert wird gemäß Schritt S25 gemäß von der dem Zeitpunkt an darauffolgenden Samples ,Aufrunden(1/2*S)' erneut die Anzahl von S Samples gesampelt und ebenfalls erneut gefittet. Hierzu werden erneut Beschleunigungsdaten der Tangentialbeschleunigung über eine halbe Rotationsperiode aufgezeichnet gemäß Schritt S30 analog zu Schritt S5 und anschließend gemäß Schritt S31 analog Schritt S6 erneut das oben beschriebene Verfahren der Autolokation durchgeführt. In einem weiteren Schritt S32 wird analog zu Schritt S7 überprüft, ob die zeitliche Position des jeweils jüngsten Maximums ausreichend genau bestimmt werden konnte. Falls ja, wird in einem Schritt S33 eine Korrektur der bestimmten zeitlichen Position des Extremums, hier das Maximum, durchgeführt. Diese Korrektur entspricht

$$T \cdot \frac{\tan^{-1}\left(\frac{-a_x}{a_z}\right)}{2\pi}$$ , wobei T die Periodendauer einer

Radumdrehung entspricht, $a_x$ die Tangentialbeschleunigung und $a_z$ die Radialbeschleunigung. Danach endet das Verfahren gemäß Schritt S34. Insgesamt werden die Schritte S0-S34 als Schritt S35 bezeichnet. Zumindest zwei Schritte S35-1, S35-2 werden durchgeführt um zumindest zwei zeitliche Position des jeweils jüngsten Maximums zu bestimmen. Anhand der zeitlichen Position der zumindest zwei jüngsten Maxima kann dann in einem von den Schritten S0-S34 unabhängigen Schritt S40 mittels eines weiteren Verfahrens die Position des jeweiligen Rades bestimmt werden.

Die Schritte S35-1, S35-2, ..., S35-n, n>=2 können kontinuierlich und/oder periodisch, beispielsweise mit einer Periode von 10 Sekunden durchgeführt werden.

In jedem der Fälle S10-S25 wird insbesondere beim zweiten Fitting das Maximum nun im Fitting-Intervall der Daten liegen und durch Extremwertuntersuchung kann die Lookback-Time gemäß Schritt S31 analog S6 einfach berechnet werden. Die ermittelten und korrigierten zumindest zwei Lockback-Time-Wert-Daten werden in dieser Ausführungsform im Anschluss an einen Receiver gesendet, der ebenfalls von jedem der Räder ABS-Geschwindigkeits-Daten erhält. Auf dem Receiver werden mindestens zwei solcher Datenpakete verarbeitet und miteinander verglichen, wofür mindestens zwei Durchläufe S0-S34 notwendig sind, und somit wird die Position der Räder identifiziert (Schritt S40).

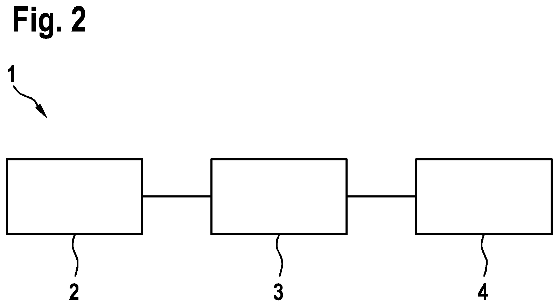

Figur 2 zeigt eine Vorrichtung gemäß einer Ausführungsform der vorliegenden Erfindung.

In Figur 2 ist in schematischer Form eine Vorrichtung zur Bestimmung der Position von Rädern an einem Fahrzeug mittels eines Beschleunigungssensors an einem Rad des Fahrzeugs gezeigt.

Die Vorrichtung 1 umfasst zumindest zwei Beschleunigungssensoren 2, wobei jeweils einer an einem Rad des Fahrzeugs angeordnet ist, wobei das Fahrzeug zumindest zwei Räder aufweist. Darüber hinaus umfasst die Vorrichtung 1 eine Bereitstellungseinrichtung 4, die weitere Daten des Rades bereitstellt und eine Auswerteeinrichtung 3, die mit den Beschleunigungssensoren 2 und der Bereitstellungseinrichtung 4 verbunden ist und die ausgebildet ist, die folgenden Schritte durchzuführen

- Berechnen einer Umdrehungszeit zumindest eines der zumindest zwei Räder basierend auf einer ermittelten Zentrifugalkraft anhand von Daten des jeweiligen Beschleunigungssensors 2,
- Ermitteln einer Tangentialbeschleunigung des Rades anhand von Daten des jeweiligen Beschleunigungssensors 2 über eine Zeitspanne, die zumindest der Hälfte der Umdrehungszeit entspricht,
- Festlegen und/oder Anpassen des Startpunkts der Zeitspanne in Abhängigkeit der Größe des Anfangswerts und/oder Endwerts der Tangentialbeschleunigung im Vergleich zur zeitlichen Position eines Extremums der Tangentialbeschleunigung in der Zeitspanne,

- Bestimmen der zeitlichen Position des zeitlich jüngsten Extremums der Tangentialbeschleunigung in der Zeitspanne, und

wobei mittels der Schritte zumindest zwei zeitliche Positionen von zeitlich jüngsten Extrema in unterschiedlichen Zeitspannen bestimmt werden und wobei die Position des Rades am Fahrzeug durch Vergleich der zumindest zwei bestimmten zeitlichen Positionen mit weiteren vorgegebenen Daten der Bereitstellungseinrichtung durch die Auswerteeinrichtung erfolgt.

Zusammenfassend weist zumindest eine der Ausführungsformen der vorliegenden Erfindung zumindest eines der folgenden Merkmale auf und/oder ermöglicht zumindest einen der folgenden Vorteile:

- Zuverlässige und schnelle Erkennung der Position eines Rades am Fahrzeug
- Einfache, energieeffiziente und kostengünstige Durchführung

Mit anderen Worten werden in Ausführungsformen der Erfindung mit Hilfe von Beschleunigungsdaten kommend von Beschleunigungssensoren, die beispielsweise an jeder Felge eines Rads angebracht sind, die unterschiedliche Laufzeit der Räder bei einer Kurvenfahrt eines Fahrzeugs genutzt, um beispielsweise mit Hilfe einer Korrelationsanalyse mit ABS-Geschwindigkeits-Daten die Position der Räder am Fahrzeug zu ermitteln. Dabei wird eine vorgegebene Drehwinkel-Position der Räder in Form eines Zeitpunktes, der Lookback-Time, aus den Beschleunigungsdaten wiederholt bestimmt und mit den ABS-Geschwindigkeits-Daten für jedes Rad wiederholt verglichen. Je weniger die verglichenen Werte in Form einer Differenz streuen, desto wahrscheinlicher wird ein Rad identifiziert.

Obwohl die vorliegende Erfindung anhand bevorzugter Ausführungsbeispiele beschrieben wurde, ist sie nicht darauf beschränkt, sondern auf vielfältige Weise modifizierbar.

## Patentansprüche

1. Verfahren zur Bestimmung der Position von Rädern an einem Fahrzeug mittels zumindest zwei Beschleunigungssensoren, wobei jeweils einer an jedem von zumindest zwei Rädern des Fahrzeugs angeordnet ist, umfassend die Schritte

   - Berechnen (S4a, S4b) einer Umdrehungszeit zumindest eines der zumindest zwei Räder basierend auf einer ermittelten Zentrifugalkraft mittels des jeweiligen Beschleunigungssensors (2),

   - Ermitteln (S5) einer Tangentialbeschleunigung des Rades mittels des jeweiligen Beschleunigungssensors (2) über eine Zeitspanne, die zumindest der Hälfte der Umdrehungszeit entspricht,
   - Bestimmen (S6, S31) der zeitlichen Position des zeitlich jüngsten Extremums der Tangentialbeschleunigung in der Zeitspanne, und
   wobei mittels der Schritte (S0-S34) zumindest zwei zeitliche Positionen von zeitlich jüngsten Extrema in unterschiedlichen Zeitspannen bestimmt werden und wobei in einem weiteren Schritt (S40) die Position des Rades am Fahrzeug durch Vergleich der zumindest zwei bestimmten zeitlichen Positionen mit weiteren vorgegebenen Daten erfolgt, **gekennzeichnet durch**
   - Festlegen und/oder Anpassen (S10-S14, S20-S25) des Startpunkts der Zeitspanne in Abhängigkeit der Größe des Anfangswerts und/oder Endwerts der Tangentialbeschleunigung im Vergleich zur zeitlichen Position eines Extremums der Tangentialbeschleunigung in der Zeitspanne.

2. Verfahren gemäß Anspruch 1, wobei ein neuer zeitlicher Startpunkt für die Zeitspanne in Abhängigkeit einer vorgegebenen Anzahl von Samples festgelegt wird, falls das Extremum in Form eines Maximums nicht in der Zeitspanne liegt.

3. Verfahren gemäß Anspruch 2, wobei im Falle eines Extremums in Form eines Maximums, der neue zeitliche Startpunkt im Fall, wenn der Anfangswert größer ist als der Endwert, als mindestens das 1,525-fache der Anzahl der Samples und maximal das 1,725-fache der Anzahl der Samples, insbesondere das 1,625-fache der Anzahl der Samples, festgelegt wird, und wobei der neue zeitliche Startpunkt, wenn der Anfangswert kleiner ist als der Endwert, als mindestens das 0,4-fache der Anzahl der Samples und maximal das 0,6-fache der Anzahl der Samples, insbesondere das 0,5-fache der Anzahl der Samples festgelegt wird.

4. Verfahren gemäß einem der Ansprüche 1-3, wobei im Falle eines Minimums der neue zeitliche Startpunkt im Fall, wenn der Anfangswert größer ist als der Endwert, als zwischen dem 1,1-fachen und dem 1,3-fachen der Anzahl der Samples, insbesondere dem 1,2-fachen der Anzahl der Samples, festgelegt wird, und wobei der neue zeitliche Startpunkt, wenn der Anfangswert kleiner ist als der Endwert, als zwischen dem 0,6-fachen und 0,8-fachen der Anzahl der Samples, insbesondere dem 0,7-fachen der Anzahl der Samples, festgelegt wird.

5. Verfahren gemäß einem der Ansprüche 1-4, wobei das Bestimmen der zeitlichen Position des zeitlich jüngsten Extremums anhand eines angepassten Polynoms zumindest zweiten Grades erfolgt.

6. Verfahren gemäß Anspruch 2, wobei die Frequenz der Samples anhand der Zeitspanne festgelegt wird.

7. Verfahren gemäß einem der Ansprüche 1-6, wobei die weiteren vorgegebenen Daten von einem weiteren Fahrzeugsystem (4), insbesondere einem ABS-System bereitgestellt werden.

8. Verfahren gemäß einem der Ansprüche 1-7, wobei falls die Position des Rades nicht mit einer vorgegebenen Genauigkeit bestimmt werden kann, die Schritte des Verfahrens erneut durchgeführt werden.

9. Verfahren gemäß Anspruch 5, wobei die Güte der Anpassung des Polynoms ermittelt wird und insbesondere an eine Auswerteeinrichtung übertragen wird.

10. Verfahren gemäß einem der Ansprüche 1-9, wobei für die zeitliche Position des Extremums eine Korrektur (S33) durchgeführt wird, die abhängig ist von der Periodendauer einer Radumdrehung und von der Radial- und Tangentialbeschleunigung des Rades.

11. Vorrichtung (1) zur Bestimmung der Position von Rädern an einem Fahrzeug mittels eines Beschleunigungssensors an einem Rad des Fahrzeugs, umfassend zumindest zwei Beschleunigungssensoren (2), wobei jeweils einer an jedem von zumindest zwei Rädern des Fahrzeugs angeordnet ist,

    eine Bereitstellungseinrichtung (4), die weitere Daten der zumindest zwei Räder bereitstellt und eine Auswerteeinrichtung (3), die mit den Beschleunigungssensoren (2) und der Bereitstellungseinrichtung (4) verbunden ist und die ausgebildet ist, die folgenden Schritte durchzuführen:

      - Berechnen einer Umdrehungszeit zumindest eines der zumindest zwei Räder basierend auf einer ermittelten Zentrifugalkraft anhand von Daten des jeweiligen Beschleunigungssensors (2),
      - Ermitteln einer Tangentialbeschleunigung des Rades anhand von Daten des jeweiligen Beschleunigungssensors (2) über eine Zeitspanne, die zumindest der Hälfte der Umdrehungszeit entspricht,
      - Bestimmen der zeitlichen Position des zeitlich jüngsten Extremums der Tangentialbeschleunigung in der Zeitspanne, und

wobei mittels der Schritte (S0-S34) zumindest zwei zeitliche Positionen von zeitlich jüngsten Extrema in unterschiedlichen Zeitspannen bestimmt werden und wobei die Position des Rades am Fahrzeug durch Vergleich der zumindest zwei bestimmten zeitlichen Positionen mit weiteren vorgegebenen Daten der Bereitstellungseinrichtung (4) durch die Auswerteeinrichtung (3) erfolgt, **gekennzeichnet durch**

      - Festlegen und/oder Anpassen des Startpunkts der Zeitspanne in Abhängigkeit der Größe des Anfangswerts und/oder Endwerts der Tangentialbeschleunigung im Vergleich zur zeitlichen Position eines Extremums der Tangentialbeschleunigung in der Zeitspanne.

## Claims

1. Method for determining the position of wheels on a vehicle by means of at least two acceleration sensors, wherein one is arranged in each case on each of at least two wheels of the vehicle, comprising the steps of

      - calculating (S4a, S4b) a revolution time of at least one of the at least two wheels based on an ascertained centrifugal force by means of the respective acceleration sensor (2),
      - ascertaining (S5) a tangential acceleration of the wheel by means of the respective acceleration sensor (2) over a period of time which corresponds to at least half the revolution time,
      - determining (S6, S31) the temporal position of the temporally most recent extreme of the tangential acceleration in the period of time, and wherein at least two temporal positions of temporally most recent extremes in different periods of time are determined by means of the steps (S0-S34), and wherein in a further step (S40) the position of the wheel on the vehicle is effected by comparing the at least two determined temporal positions with further predefined data, **characterized by**
      - setting and/or adjusting (S10-S14, S20-S25) the start point of the period of time on the basis of the size of the starting value and/or end value of the tangential acceleration in comparison with the temporal position of an extreme of the tangential acceleration in the period of time.

2. Method according to Claim 1, wherein a new temporal start point for the period of time is defined on the basis of a predefined number of samples if the extreme in the form of a maximum is not in the period of time.

3. Method according to Claim 2, wherein, in the case of an extreme in the form of a maximum, the new temporal start point is set to be at least 1.525 times the number of samples and at most 1.725 times the number of samples, in particular 1.625 times the number of samples, if the starting value is greater than the end value, and wherein the new temporal start point is set to be at least 0.4 times the number of samples and at most 0.6 times the number of samples, in particular 0.5 times the number of samples, if the starting value is less than the end value.

4. Method according to one of Claims 1-3, wherein, in the case of a minimum, the new temporal start point is set to be between 1.1 times and 1.3 times the number of samples, in particular 1.2 times the number of samples, if the starting value is greater than the end value, and wherein the new temporal start point is set to be between 0.6 times and 0.8 times the number of samples, in particular 0.7 times the number of samples, if the starting value is less than the end value.

5. Method according to one of Claims 1-4, wherein the temporal position of the temporally most recent extreme is determined using an adapted at least second degree polynomial.

6. Method according to Claim 2, wherein the frequency of the samples is determined based on the period of time.

7. Method according to one of Claims 1-6, wherein the further predefined data are provided by a further vehicle system (4), in particular an ABS system.

8. Method according to one of Claims 1-7, wherein, if the position of the wheel cannot be determined with a predefined accuracy, the steps of the method are carried out again.

9. Method according to Claim 5, wherein the quality of the adaptation of the polynomial is ascertained and is in particular transferred to an evaluation device.

10. Method according to one of Claims 1-9, wherein a correction (S33) is carried out for the temporal position of the extreme, which correction is dependent on the period duration of a wheel revolution and on the radial and tangential acceleration of the wheel.

11. Apparatus (1) for determining the position of wheels on a vehicle by means of an acceleration sensor on a wheel of the vehicle, comprising at least two acceleration sensors (2), wherein one is arranged in each case on each of at least two wheels of the vehicle,

    a provision device (4) that provides further data relating to the at least two wheels, and
an evaluation device (3) which is connected to the acceleration sensors (2) and the provision device (4) and is designed to carry out the following steps of:

    - calculating a revolution time of at least one of the at least two wheels based on an ascertained centrifugal force on the basis of data from the respective acceleration sensor (2),
    - ascertaining a tangential acceleration of the wheel on the basis of data from the respective acceleration sensor (2) over a period of time which corresponds to at least half the revolution time,
    - determining the temporal position of the temporally most recent extreme of the tangential acceleration in the period of time, and

wherein at least two temporal positions of temporally most recent extremes in different periods of time are determined by means of the steps (S0-S34), and wherein the position of the wheel on the vehicle is effected by comparing the at least two determined temporal positions with further predefined data from the provision device (4) by way of the evaluation device (3), **characterized by**

    - setting and/or adjusting the start point of the period of time on the basis of the size of the starting value and/or end value of the tangential acceleration in comparison with the temporal position of an extreme of the tangential acceleration in the period of time.

## Revendications

1. Procédé de définition de la position de roues sur un véhicule au moyen d'au moins deux capteurs d'accélération, un capteur d'accélération étant disposé respectivement sur chacune d'au moins deux roues du véhicule, comprenant les étapes

    - calcul (S4a, S4b) d'un temps de rotation d'au moins une des au moins deux roues sur la base d'une force centrifuge déterminée au moyen du capteur d'accélération (2) respectif,
    - détermination (S5) d'une accélération tangentielle de la roue au moyen du capteur d'accélération (2) respectif sur un laps de temps, qui correspond au moins à la moitié du temps de rotation,
    - définition (S6, S31) de la position dans le temps de la valeur extrême la plus précoce dans le temps de l'accélération tangentielle dans le laps de temps, et au moins deux positions dans le temps étant définies par des valeurs extrêmes les plus précoces dans le temps dans différents laps de temps au moyen des étapes (S0-S34) et la position de la roue sur le véhicule étant définie dans une autre étape (S40) par comparaison des au moins deux positions dans le temps définies à d'autres données spécifiées, **caractérisé par**
- fixation et/ou adaptation (S10-S14, S20-S25) du point de départ du laps de temps en fonction de la grandeur de la valeur de départ et/ou de la valeur finale de l'accélération tangentielle en comparaison avec la position dans le temps d'une valeur extrême de l'accélération tangentielle dans le laps de temps.

2. Procédé selon la revendication 1, un nouveau point de départ dans le temps étant fixé pour le laps de temps en fonction d'un nombre spécifié d'échantillons si la valeur extrême sous la forme d'une valeur maximale ne se situe pas dans le laps de temps.

3. Procédé selon la revendication 2, le nouveau point de départ dans le temps étant fixé, dans le cas d'une valeur extrême sous la forme d'une valeur maximale, lorsque la valeur de départ est supérieure à la valeur finale, comme étant égal à au moins 1,525 fois le nombre des échantillons et au maximum à 1,725 fois le nombre des échantillons, en particulier à 1,625 fois le nombre des échantillons, le nouveau point de départ dans le temps étant fixé, lorsque la valeur de départ est inférieure à la valeur finale, comme étant au moins égal à 0,4 fois le nombre des échantillons et au maximum à 0,6 fois le nombre des échantillons, en particulier à 0,5 fois le nombre des échantillons.

4. Procédé selon l'une des revendications 1-3, le nouveau point de départ dans le temps étant fixé, dans le cas d'une valeur minimale, lorsque la valeur de départ est supérieure à la valeur finale, comme étant compris entre 1,1 fois et 1,3 fois le nombre des échantillons et en particulier comme étant égal à 1,2 fois le nombre des échantillons, et le nouveau point de départ dans le temps étant fixé, lorsque la valeur de départ est inférieure à la valeur finale, comme étant compris entre 0,6 fois et 0,8 fois le nombre des échantillons, en particulier comme étant égal à 0,7 fois le nombre des échantillons.

5. Procédé selon l'une des revendications 1-4, la définition de la position dans le temps de la valeur extrême la plus précoce dans le temps étant effectuée à l'aide d'un polynôme adapté de deuxième degré au moins.

6. Procédé selon la revendication 2, la fréquence des échantillons étant fixée à l'aide du laps de temps.

7. Procédé selon l'une des revendications 1-6, les autres données spécifiées étant fournies par un autre système de véhicule (4), en particulier un système ABS.

8. Procédé selon l'une des revendications 1-7, les étapes du procédé étant mises en œuvre à nouveau si la position de la roue ne peut pas être définie avec une précision spécifiée.

9. Procédé selon la revendication 5, la qualité de l'adaptation du polynôme étant déterminée et étant transférée en particulier à un dispositif d'évaluation.

10. Procédé selon l'une des revendications 1-9, une correction (S33) étant mise en œuvre, laquelle dépend de la durée de période de la rotation de roue et de l'accélération radiale et tangentielle de la roue pour la position dans le temps de la valeur extrême.

11. Dispositif (1) de définition de la position de roues sur un véhicule au moyen d'un capteur d'accélération sur une roue du véhicule, comprenant au moins deux capteurs d'accélération (2), un capteur d'accélération étant disposé respectivement sur chacune d'au moins deux roues du véhicule,

un système de fourniture (4), qui fournit d'autres données des au moins deux roues, et
un système d'évaluation (3), qui est relié aux capteurs d'accélération (2) et au système de fourniture (4) et qui est réalisé pour mettre en œuvre les étapes suivantes :

- calcul d'un temps de rotation d'au moins une des au moins deux roues sur la base d'une force centrifuge déterminée à l'aide de données du capteur d'accélération (2) respectif,
- détermination de l'accélération tangentielle de la roue à l'aide de données du capteur d'accélération (2) respectif sur un laps de temps, qui correspond au moins à la moitié du temps de rotation,
- définition de la position dans le temps de la valeur extrême la plus précoce dans le temps de l'accélération tangentielle dans le laps de temps, et

au moins deux positions dans le temps de valeurs extrêmes les plus précoces dans le temps étant définies dans différents laps de temps au moyen des étapes (S0-S34) et la position de la roue sur le véhicule étant définie par comparaison des au moins deux positions dans le temps définies à d'autres données spécifiées du système de fourniture (4) par le système d'évaluation (3), **caractérisé par**

- fixation et/ou adaptation du point de départ du laps de temps en fonction de la grandeur de la valeur de départ et/ou de la valeur finale de l'accélération tangentielle en comparaison avec la position dans le temps d'une valeur extrême de l'accélération tangentielle dans le laps de temps.

# Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2016297262 A1
- US 2014167950 A1